# EUROPÄISCHE PATENTSCHRIFT

(11) **EP 1 069 025 B1**
(45) Veröffentlichungstag und Bekanntmachung des Hinweises auf die Patenterteilung: **02.11.2005**
(21) Anmeldenummer: 00110991.7
(22) Anmeldetag: 29.05.2000
(51) Int. Cl.: B62D 15/02

(54) **Lenkstockmodul mit Lenkwinkelsensor und geringer Empfindlichkeit des Lenkwinkelsensors gegenüber Rundlauffehlern der Lenksäule**
Steering column module with steering angle sensor and low sensitivity of the steering angle sensor relative to runout of the steering column
Module de colonne de direction avec capteur d'angle de braquage et faible sensibilité de capteur d'angle de braquage par rapport aux faux-ronds de colonne de direction

(30) Priorität: 15.07.1999 DE 19933049
(43) Veröffentlichungstag der Anmeldung: 17.01.2001
(73) Patentinhaber: Valeo Schalter und Sensoren GmbH, 74321 Bietigheim-Bissingen (DE)
(72) Erfinder: Kofink, Peter, 74379 Ingersheim 2 (DE); Ruetz, Christian, 71636 Ludwigsburg (DE)
(74) Vertreter: Dreiss, Fuhlendorf, Steimle & Becker

(56) Entgegenhaltungen:
- EP-A- 0 763 447
- EP-A- 1 065 134
- DE-A- 19 525 138
- US-A- 5 243 188

## Beschreibung

Die Erfindung betrifft ein Lenkstockmodul für Kraftfahrzeuge mit einer Signalübertragungskassette, wobei die Signalübertragungskassette einen mit einem Lenkrad des Kraftfahrzeugs drehbaren Teil aufweist, und mit einem Lenkwinkelsensor, wobei der Lenkwinkelsensor eine in dem Lenkwinkelsensor drehbar gelagerte Codescheibe aufweist.

Bekannt ist ein Lenkstockmodul bei dem eine Codescheibe, bei der die Winkelinformation in Form von Codezähnen abgespeichert ist, Bestandteil des drehbaren Teils der Signalübertragungskassette ist.

Nachteilig an dieser Anordnung ist, dass der drehbare Teil der Signalübertragungskassette mit dem Lenkrad des Kraftfahrzeugs gekoppelt ist und somit alle Fertigungs- oder Montagetoleranzen in axialer und radialer Richtung von Lenksäule und Lenkrad auf die Codescheibe übertragen werden. Da die zu messenden Lenkwinkel sehr genau bestimmt werden sollen, sind die zulässigen Toleranzen hinsichtlich der Codescheibe und der Abtasteinrichtung des Lenkwinkelsensors sehr klein. Die o. g. Toleranzen von Lenksäule und Lenkrad können somit einen erheblichen Fehler bei der Messung des Lenkwinkelsensors verursachen oder sogar zu einer Beschädigung von Codescheibe oder Abtasteinrichtung führen, wenn diese Bauteile einander berühren. Außerdem ist das Lenkstockmodul nur funktionsfähig, wenn es in einem Kraftfahrzeug eingebaut ist, da der drehbare Teil der Signalübertragungskassette und damit auch die Codescheibe vom Lenkrad gehalten wird.

Aus der US 5,243,188 ist ein Lenkstockmodul bekannt, bei dem eine Codescheibe an der Lenksäule gelagert ist. Auch bei diesem Lenkstockmodul haben Rundlaufungenauigkeiten der Lenksäule und Fluchtungsfehler zwischen der Lenksäule und dem Drehwinkelsensor des Lenkstockmoduls nachteilige Auswirkungen auf die Genauigkeit des Drehwinkelsensors.

Aus der nachveröffentlichten EP 1 065 134 A1 ist ein Lenkwinkelsensor bekannt, bei dem die Codescheibe im Gehäuse des Lenkwinkelsensors gelagert ist.

Der Erfindung liegt daher die Aufgabe zugrunde, ein Lenkstockmodul bereitzustellen, bei dem die Messung des Lenkwinkels unempfindlich gegenüber Fertigungsungenauigkeiten von Lenksäule und Lenkrad des Kraftfahrzeugs ist. Weiterhin soll das Lenkstockmodul auch außerhalb eines Kraftfahrzeugs funtkionstüchtig sein.

Diese Aufgabe wird nach Anspruch 1 gelöst.

Bei einer Ausführungsform ist die Codescheibe mit dem drehbaren Teil der Signalübertragungskassette drehfest verbunden. Diese Ausführungsform hat den Vorteil, dass die Lenkbewegung nach wie vor über die Signalübertragungskassette übertragen wird; allerdings wirken sich Ungenauigkeiten der Lenksäule, des Lenkrads und/oder der Signalübertragungskassette wegen der, in Richtung der Längsachse der Lenksäule gesehen, näher an der Lagerung der Lenksäule im Mantelrohr angeordneten Codescheibe nur in geringerem Umfang auf die Messung des Lenkwinkels aus.

Eine Variante sieht vor, dass an der Codescheibe oder dem drehbaren Teil der Signalübertragungskassette mindestens ein in axialer Richtung weisender Vorsprung vorgesehen ist, der in eine sich in radialer Richtung erstreckende Ausnehmung in den drehbaren Teil der der Signalübertragungskassette bzw. der Codescheibe eingreift. Diese Variante hat den Vorteil, dass die Seitenwände der Ausnehmung in der Lage sind, von dem Vorsprung ausgehende oder auf den Vorsprung ausgeübte Kräfte in tangentialer Richtung aufzunehmen bzw. auf den Zapfen zu übertragen. Da die Ausnehmung aber in radialer Richtung verläuft, können keine Kräfte in radialer Richtung zwischen Ausnehmung und Vorsprung übertragen werden. Entsprechendes gilt für die axiale Richtung, da der Zapfen sich in dieser Richtung frei bewegen kann. Dies gilt insbesondere dann, wenn die Ausnehmung eine Durchgangsöffnung ist.

Eine andere Ausführungsform sieht vor, dass der oder die Vorsprünge exzentrisch angeordnete, sich in axialer Richtung erstreckende Zapfen sind, und dass die Ausnehmungen sich in radialer Richtung erstreckende Langlöcher sind, so dass die Herstellung einer in tangentialer Richtung spielfreien Kraftübertragung, die keine Radialkräfte überträgt, einfach und kostengünstig erfolgt.

Nach einer weiteren Variante ist vorgesehen, dass die Codescheibe radial gesichert und drehbar in einem Träger des Lenkwinkelsensors gelagert ist, so dass Codescheibe und Lenkwinkelsensor als montagefertige Einheit hergestellt werden können und die relative Lage beider Bauteile zueinander keinen Veränderungen unterworfen ist.

Nach einer vorteilhaften Ausgestaltung der Erfindung ist die Codescheibe radial gesichert und drehbar in einem Gehäuse des Lenkwinkelsensors gelagert, so dass die Codescheibe einfach montierbar ist, indem das Gehäuse mit dem Lenkwinkelsensor verbunden wird.

Nach einer weiteren vorteilhaften Ausgestaltung der Erfindung ist auf dem Träger des Lenkwinkelsensors eine Abtasteinrichtung zum Abtasten der Codescheibe angeordnet, so dass die Genauigkeit der relativen Lage von Codescheibe und Abtasteinrichtung weiter verbessert wird.

In Ergänzung der Erfindung ist vorgesehen, dass die Drehwinkelcodierung auf einer Stirnfläche der Codescheibe angeordnet ist, so dass der Lenkwinkelsensor besonders kompakt baut.

Bei einer anderen Variante erfolgt die Drehwinkelcodierung auf der Codescheibe in Form von Löchern. Diese Art der Drehwinkelcodierung ist besonders robust, einfach herzustellen und unempfindlich gegen äußere Einflüsse wie beispielsweise Verschmutzungen.

Eine andere Variante sieht vor, dass die Drehwinkelcodierung auf einer Mantelfläche der Codescheibe angeordnet ist, so dass die Abtastvorrichtung im wesentlichen außerhalb der Codescheibe angeordnet werden kann.

Ein Ausführungsbeispiel des Gegenstands der Erfindung ist in der Zeichnung dargestellt und im folgenden näher beschrieben.
Es zeigen:
- Fig. 1:: ein erfindungsgemäßes Lenkstockmodul in Explosionsdarstellung;
- Fig. 2:: eine Ausführungsform eines erfindungsgemäßen Lenkwinkelsensors in Explosionsdarstellung;
- Fig. 3:: eine weitere Ausführungsform eines erfindungsgemäßen Lenkwinkelsensors in Explosionsdarstellung;
- Fig. 4:: das Zusammenwirken von Lenkwinkelsensor und Signalübertragungskassette in Explosionsdarstellung und
- Fig. 5:: das Zusammenwirken von Lenkwinkelsensor und Lenkstockschalter in Explosionsdarstellung.

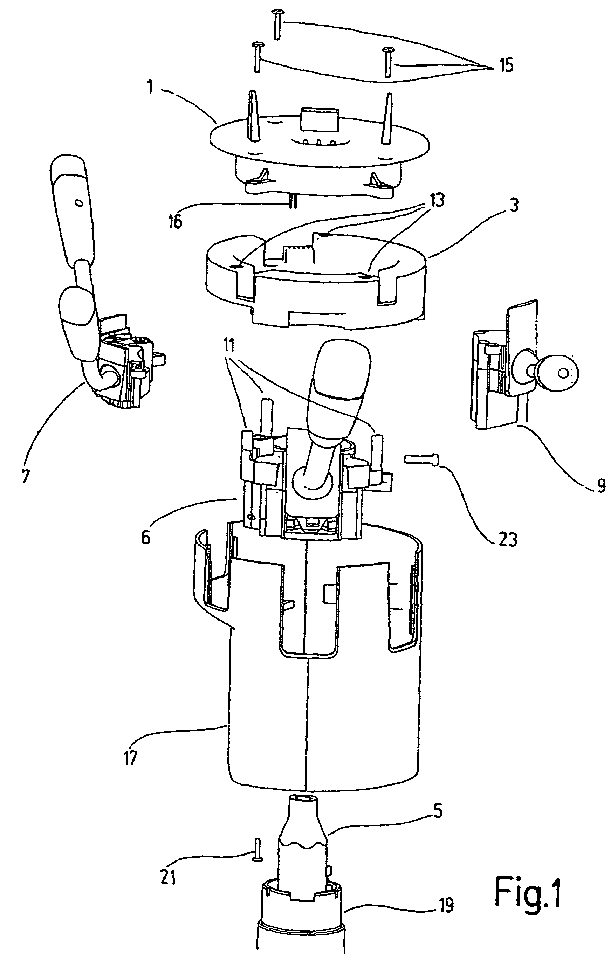

In Fig. 1 ist ein erfindungsgemäßes Lenkstockmodul in Explosionsdarstellung gezeigt. Eine Signalübertragungskassette 1 dient der Übertragung elektrischer Signale von einem nicht dargestellten Lenkrad zum Lenkstockmodul und von dort in das Bordnetz des Kraftfahrzeugs. Die Signalübertragungskassette 1 weist unter anderem ein relativ zum Lenkstockmodul feststehendes Teil und ein sich mit dem Lenkrad drehendes Teil auf. In der Signalübertragungskassette 1 befindet sich ein nicht dargestelltes Breitbandkabel, welches beipsielsweise als Wickelfeder ausgestaltet ist. Über dieses Breitbandkabel werden Informationen, bzw. elektrische Ströme vom Lenkrad zum Kraftfahrzeug und umgekehrt übertragen. Bei modernen Kraftfahrzeugen können u. a. Hupe, Airbag und die Wahl einer Schaltstufe vom Lenkrad aus betätigt werden.

Unterhalb der Signalübertragungskassette 1 ist ein Lenkwinkelsensor 3 dargestellt. Der Lenkwinkelsensor 3 ermittelt beispielsweise durch optische Abtastung einer nicht dargestellten Codescheibe den Lenkwinkel einer Lenksäule 5 und damit auch die Stellung der gelenkten Räder. Die Lenkwinkeldaten können mittels einer nicht dargestellten ersten Auswerteelektronik in Low- oder High-Speed-CAN-Bus-Daten kodiert und dem Kraftfahrzeug gesendet werden. Dort können sie beispielsweise als Eingangsgröße für ein Fahrstabilitätsprogramm verwandt werden.

Ein erster Lenkstockschalter 6 dient beispielsweise zur Betätigung der Fahrtrichtungsanzeige, des Lichts und der Wischeranlage. Darüber hinaus ist der erste Lenkstockschalter 6 Träger des Lenkstockmoduls; d. h. mit ihm sind die übrigen Komponenten des Lenkstockmoduls verbunden. Dies geschieht, indem ein zweiter Lenkstockschalter 7 und ein dritter Lenkstockschalter 9 über als zylindrische Stifte ausgeführte Führungen 11 von oben aufgesteckt werden. Anschließend wird der Lenkwinkelsensor 3 auf die Führungen 11 aufgeschoben. Zu diesem Zweck weist der Lenkwinkelsensor 3 Bohrungen 13 auf, die bezüglich Durchmesser und Abstand den Führungen 11 entsprechen. Schließlich wird die Signalübertragungskassette 1 aufgesteckt und das Lenkstockmodul fixiert, indem drei Schrauben 15 in nicht dargestellte Gewinde in den Führungen 11 gedreht werden. Die drei Schrauben 15 gehen durch entsprechende Bohrungen in der Signalübertragungskassette 1 und dem Lenkwinkelsensor 3.

Eine Verkleidung 17 schützt das Lenkstockmodul vor äußeren Einflüssen wie beispielsweise Staub und gibt dem Lenkstockmodul ein ansprechendes Äußeres. Darüberhinaus verkleidet es auch die Lenksäule 5 und ein Mantelrohr 19. Die Verkleidung 17 wird von unten auf das Lenkstockmodul gesteckt und mit einer oder mehreren Schrauben 21 mit dem Lenkstockmodul verschraubt. Die Lenksäule 5 ist in dem Mantelrohr 19 gelagert. D. h., dass mit zunehmendem Abstand der Lenksäule 5 vom Mantelrohr 19 der Rundlauffehler der Lenksäule und/oder die Exzentrizität der Lenksäule 5 bezüglich des Mantelrohrs 19 zunehmen.

Der zweite und der dritte Lenkstockschalter 7 und 9 können beispielsweise zur Steuerung der Kraftfahrzeuggeschwindigkeit und für Sonderfunktionen genutzt werden.

Durch die Montage des Lenkwinkelsensors 3 auf die Führungen 11 werden automatisch drei nicht dargestellte Stecker vom Lenkwinkelsensor 3 mit dem entsprechenden Stecker des ersten, zweiten und dritten Lenkstockschalters 6, 7 und 9 kontaktiert. Durch die Montage der Signalübertragungskassettte 1 auf die Führungen 11 wird automatisch auch ein nicht dargestellter Stecker der Signalübertragungskassette 1 mit einem entsprechenden Stecker des Lenkwinkelsensors 3 kontaktiert.

Über die Kontaktierungen zwischen dem Lenkwinkelsensor 3 und den Modulkomponenten Signalübertragungskassette 1, erster,zweiter und dritter Lenkstockschalter 6, 7 und 8 empfängt oder sendet eine räumlich zur ersten Auswerteelektronik benachbart angeordnete, nicht dargestellte zweite Auswerteelektronik Signale. Diese Signale werden von der zweiten Auswerteelektronik in Low- oder High-Speed-CAN-Bus-Daten kodiert oder entkodiert und dem Kraftfahrzeug gesendet oder von ihm empfangen. Vorteilhafterweise werden die Signale, welche die erste Auswerteelektronik sendet oder empfängt, und die Signale, welche die zweite Auswerteelektronik sendet oder empfängt, über eine Schnittstelle zwischen Lenkstockmodul und Kraftfahrzeug gesendet oder empfangen.

Außerdem greift ein in axialer Richtung über die Signalübertragungskassette 1 hinausragender und mit den drehbaren Teil der Signalübertragungskassette 1 verbundener Zapfen 16 in die in Fig. 1 nicht dargestellte Codescheibe des Lenkwinkelsensors 3. Der Zapfen 16 ist auch der Rückstellnocken für die Fahrtrichtungsanzeige-Funktion des ersten Lenkstockschalters 6.

Das Lenkstockmodul wird lösbar im Kraftfahrzeug montiert. Dazu wird das Lenkstockmodul von oben auf das Mantelrohr 19 des Kraftfahrzeugs gesteckt und über eine nicht dargestellte, am ersten Lenkstockschalter 6 angeordnete Befestigungsschelle mit einer Schraube 23 am Mantelrohr 19 befestigt.

Durch die Montage des Lenkstockmoduls im Kraftfahrzeug wird automatisch der nicht dargestellte Stecker vom Lenkstockmodul zum ebenfalls nicht dargestellten entsprechenden Stecker des Kraftfahrzeugs kontaktiert.

Dieser Stecker stellt die o. g. Schnittstelle zwischen Lenkstockmodul und Kraftfahrzeug dar.

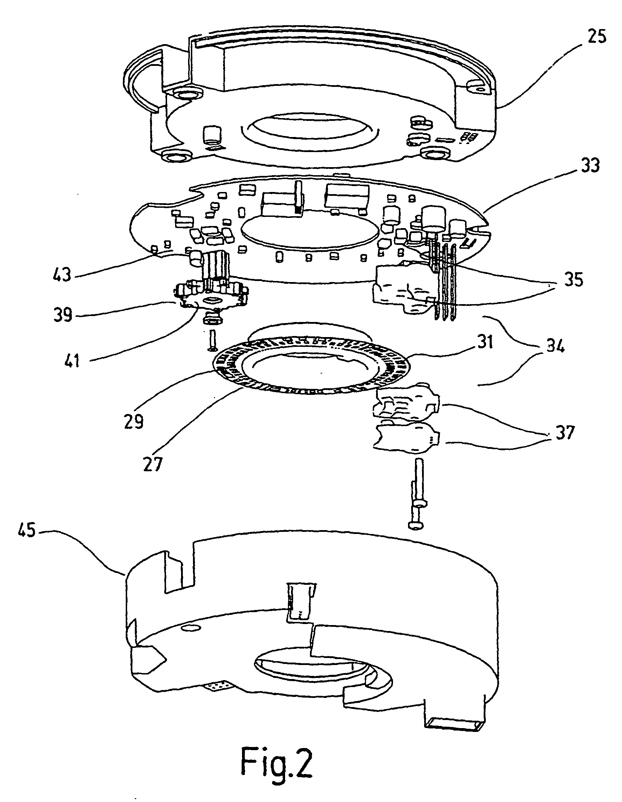

In Fig. 2 ist der Lenkwinkelsensor 3 in einer Explosionsdarstellung abgebildet. Eine drehbar in einem Träger 25 des Lenkwinkelsensors 3 gelagerte Codescheibe 27 weist eine Inkrementalspur 29 und eine Codespur 31 auf. Die Codescheibe 27 ist beispielsweise eine Lochscheibe.

In zusammengebautem Zustand greift der in Fig. 1 dargestellte Zapfen 16 in eine nicht dargestellte Ausnehmung der Codescheibe 27 und überträgt somit die Lenkbewegung des Lenkrads auf die Codescheibe 27. Die Ausnehmung kann ein sich in radialer Richtung erstreckendes Langloch sein, das die Drehbewegung des Zapfens 16 in tangentialer Richtung spielfrei überträgt und das in radialer Richtung Rundlauffehler der Lenksäule 5, der Signalübertragungskassette 1 oder des Lenkrads ausgleicht. Zusätzlich wird die Genauigkeit der Drehwinkelmessung dadurch verbessert, dass die Codescheibe, in Richtung der Längsachse der Lenksäule gesehen, näher an der Lagerung der Lenksäule im Mantelrohr angeordnet ist.

Auf einer Leiterplatte 33 des Lenkwinkelsensors 3 ist eine Abtasteinrichtung 34 dargestellt, die im wesentlichen aus einem Sender 35 mit beispielsweise 4 Leuchtdioden und einem Empfänger 37 mit beispielsweise 4 Transistoren besteht. In zusammengebautem Zustand strahlt der Sender 35 Licht durch die Löcher der Codescheibe 27 zum Empfänger 37. Durch die Anordnung der Löcher in der Inkrementalspur 29 und der Codespur 31 der Codescheibe 27 wird der Lenkwinkel über eine Lenkradumdrehung von 360° bestimmt.

Eine Umdrehungserkennung 39 ermittelt die Zahl der Lenkradumdrehungen. Dabei wird ein mit einem Magnet versehenes Zahnrad 41 einmal pro Umdrehung von der Codescheibe 27 mitgenommen. Unter dem Zahnrad 41 befinden sich 6 Hall-Elemente 43, von denen immer eines geschaltet ist. Mit 6 Hall-Elementen lassen sich somit sechs Lenkradumdrehungen eindeutig bestimmen. Auf der Leiterplatte 33 sind die erste und die zweite ; Auswerteelektronik andeutungsweise dargestellt. Da die erste und die zweite Auswerteelektronik nicht erkennbar räumlich getrennt dargestellt sind, wurde auf die Vergabe von Bezugszeichen verzichtet.

Mit einem Gehäuse 45 wird der Lenkwinkelsensor 3 vor äußeren Einflüssen geschützt.

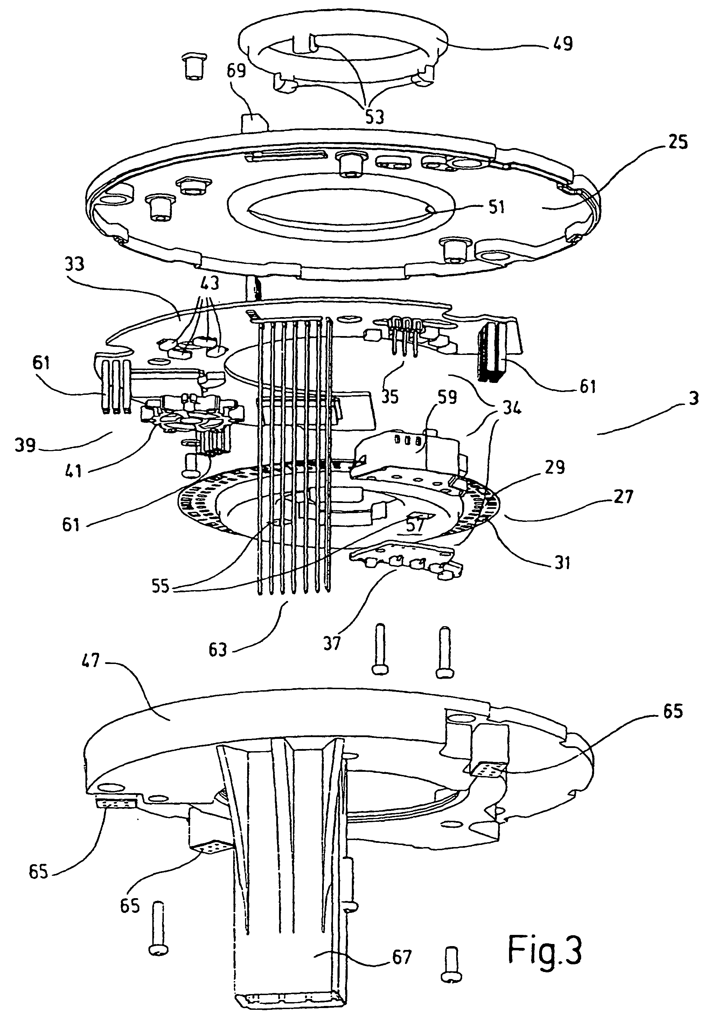

In Fig. 3 ist eine weitere Ausführungsform eines erfindungsgemäßen Lenkwinkelsensors 3 in einer Explosionsdarstellung abgebildet. Bezüglich übereinstimmender Merkmale wird auf die Fig. 1 und 2 sowie deren Beschreibung Bezug genommen.

Die Codescheibe 27 ist drehbar in dem Träger 25 des Lenkwinkelsensors 3 gelagert. Die Lagerung besteht aus einem Lagerring 49 und einer entsprechenden Bohrung 51 in dem Träger 25. Der Lagerring 49 weist drei hakenförmige Vorsprünge 53 auf, die in zusammengebautem Zustand in entsprechende Ausnehmungen 55 der Codescheibe 27 oder eines Lagerstücks 57 lösbar oder unlösbar einrasten.

Auf der Leiterplatte 33 ist eine Abtasteinrichtung 34 dargestellt, die im wesentlichen aus einem Sender 35 mit beispielsweise 5 Leuchtdioden und einem Empfänger 37 mit beispielsweise 5 Transistoren besteht. Zwischen Sender 35 und Empfänger 37 ist eine Abdeckung 59 angeordnet, die Streulicht von der Abtasteinrichtung 34 fernhält und den Sender 35 trägt. Die Umdrehungserkennung 39 weist 4 Hall-Elemente 43 auf, von denen immer eines geschaltet ist. Auf der Leiterplatte 33 sind außerdem Steckerstifte 61 und 63 dargestellt. Die Steckerstifte 61 kontaktieren in montiertem Zustand ersten, zweiten und dritten Lenkstockschalter 6, 7, und 9, während die Steckerstifte 63 das Lenkstockmodul mit dem Kraftfahrzeug kontaktieren.

An dem Gehäuse 45 sind Steckergehäuse 65 und 67 angeordnet, die in zusammengebautem Zustand des Lenkwinkelsensors 3 die Steckerstifte 61 und 63 aufnehmen, so dass sich komplette Kontaktstecker ergeben. An dem Träger 25 ist ein Kontaktstecker 69 angeordnet, der in zusammengebautem Zustand des Lenkwinkelsensors 3 die Signalübertragungskassette 1 mit dem Lenkwinkelsensor 3 kontaktiert.

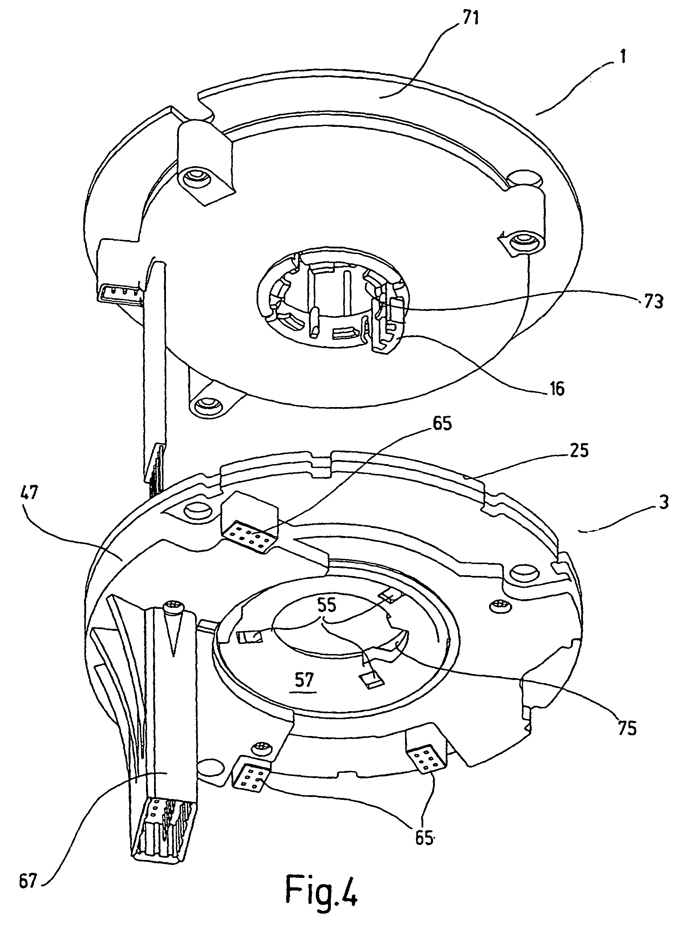

In Fig. 4 sind Signalübertragungskassette 1 und Lenkwinkelsensor 3 dargestellt. In dieser Darstellung ist das drehende Teil 71 der Signalübertragungskassette 1 zu erkennen. Es wird mit seiner Bohrung 73 über die in Fig. 4 nicht dargestellte Lenksäule geschoben und dreht sich mit der Lenksäule. Der Zapfen 16 des drehenden Teils 71 greift, wenn die Signalübertragungskassette 1 auf den Lenkwinkelsensor 3 geschoben wird, in eine Ausnehmung 75 des Lagerstücks 57 der Codescheibe 27. Dabei erfolgt die Übertragung der Lenkbewegung zwischen Signalübertragungskassette 1 und Lenkwinkelsensor 3 spielfrei. In radialer und axialer Richtung kann der Zapfen 16 sich relativ zu der Ausnehmung 73 der Codescheibe 27 bewegen.

In Fig. 4 ist auch zu erkennen, dass Steckerstifte 77 in zusammengebautem Zustand die elektrische Verbindung zwischen Signalübertragungskassette 1 einerseits und Lenkwinkelsensor 3 und Kraftfahrzeug andererseits herstellen.

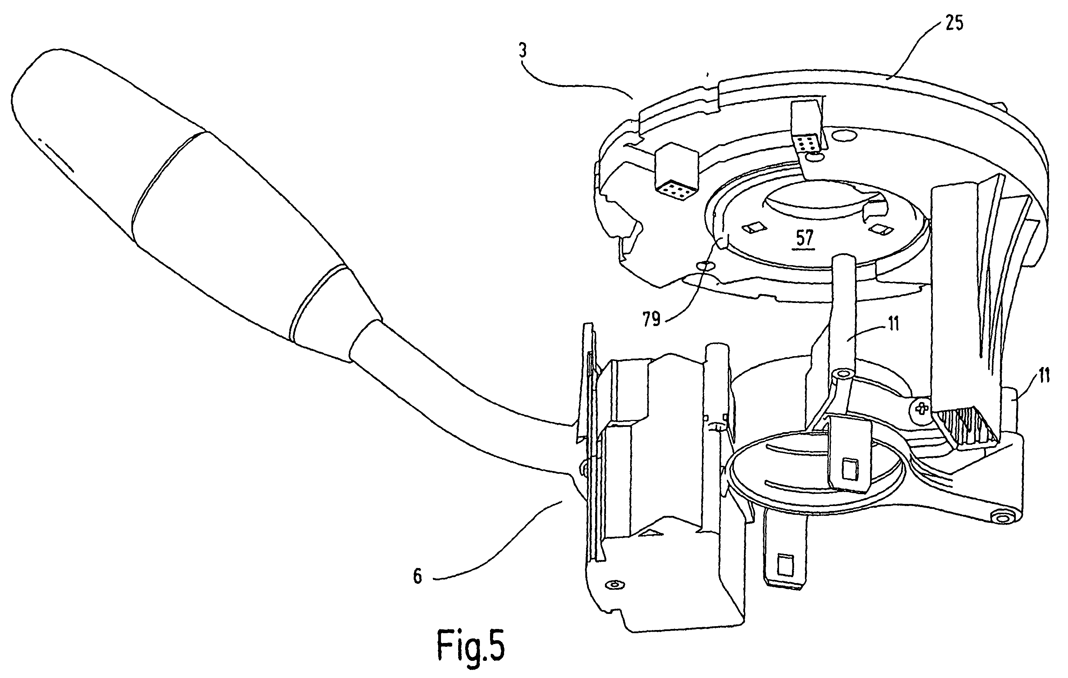

Fig. 5 zeigt den Lenkwinkelsensor 3 und den Lenkstockschalter 6, mit dem die Blinker betätigt werden. Die Lagerung der Codescheibe 27 in dem Träger 25 mittels Lagerring 49 und Lagerstück 57 ist in dieser Darstellung zu erkennen. Das Lagerstück weist einen Stift 79 auf, der in Richtung des ersten Lenkstockschalters 6 über die Codescheibe 27 und den Lenkwinkelsensor 3 hinausragt. In zusammengebautem Zustand betätigt der Stift 79 einen in dieser Darstellung nicht erkennbaren Rückstellnocken des ersten Lenkstockschalters 6 und stellt somit den ersten Lenkstockschalter zurück. Dadurch wird das Blinken des Kraftfahrzeugs beendet.

## Patentansprüche

1. Lenkstockmodul für Kraftfahrzeuge mit einer Signalübertragungskassette (1), wobei die Signalübertragungskassette (1) einen mit einem Lenkrad des Kraftfahrzeugs drehbaren Teil (71) aufweist und einen Lenkwinkelsensor (3), wobei der Lenkwinkelsensor (3) eine in dem Lenkwinkelsensor (3) drehbar gelagerte Codescheibe (27) aufweist, **dadurch gekennzeichnet, dass** die Codescheibe (27) in einem Lagerring (49) und einem Lagerstück (57) gelagert ist.

2. Lenkstockmodul nach Anspruch 1 **dadurch gekennzeichnet, dass** die Codescheibe (27) mit dem drehbaren Teil (71) der Signalübertragungskassette (1) drehfest verbunden ist.

3. Lenkstockmodul nach Anspruch 2 **dadurch gekennzeichnet, dass** an der Codescheibe (27) oder dem drehbaren Teil (71) der Signalübertragungskassette (1) mindestens ein in axialer Richtung weisender Vorsprung (16) vorgesehen ist, der in eine sich in radialer Richtung erstreckende Ausnehmung (75) in den drehbaren Teil der Signalübertragungskassette (1) bzw. der Codescheibe (27) eingreift.

4. Lenkstockmodul nach Anspruch 3, **dadurch gekennzeichnet, dass** der oder die Vorsprünge (16) exzentrisch angeordnete, sich in axialer Richtung erstreckende Zapfen (16) sind, und dass die Ausnehmungen sich in radialer Richtung erstreckende Langlöcher sind.

5. Lenkstockmodul nach einem der vorhergehenden Ansprüche, **dadurch gekennzeichnet, dass** die Codescheibe (27) radial gesichert und drehbar in einem Träger (25) des Lenkwinkelsensors (3) gelagert ist.

6. Lenkstockmodul nach einem der vorhergehenden Ansprüche, **dadurch gekennzeichnet, dass** die Codescheibe (27) radial gesichert und drehbar in einem Gehäuse (45) des Lenkwinkelsensors (3) gelagert ist.

7. Lenkstockmodul nach einem der vorhergehenden Ansprüche, **dadurch gekennzeichnet, dass** auf dem Träger (25) des Lenkwinkelsensors (3) eine Abtasteinrichtung (34) zum Abtasten der Codescheibe (27) angeordnet ist.

8. Lenkstockmodul nach einem der vorhergehenden Ansprüche, **dadurch gekennzeichnet, dass** die Drehwinkelcodierung auf einer Stirnfläche der Codescheibe (27) angeordnet ist.

9. Lenkstockmodul nach einem der vorhergehenden Ansprüche, **dadurch gekennzeichnet, dass** die Drehwinkelcodierung auf der Codescheibe (27) in Form von Löchern erfolgt.

10. Lenkstockmodul nach einem der vorhergehenden Ansprüche, **dadurch gekennzeichnet, dass** die Drehwinkelcodierung auf einer Mantelfläche der Codescheibe (27) angeordnet ist.

## Claims

1. A steering column module for vehicles having a stationary signal transmission case (1), the signal transmission case (1) is provided with a part (71) rotatable together with the steering wheel and with a steering angle sensor (3), the steering angle sensor (3) having a code disk (27) mounted rotatable within the steering angle sensor (3), **characterized in that** the code disk (27) is mounted in a bearing ring (49) and a bearing piece (57).

2. The steering column module of claim 1, **characterized in that** said code disc (27) is connected with the roatable part (71) of the signal transmission case (1) in a torque proof manner.

3. The steering column module of claim 2, **characterized in that** said code disc (27) or said rotatable part(71) comprises at least one projection (16) extending in an axial direction which engages in an associated recess (75), extending in the radial direction, in the rotatabel part in said signal transmission case (1) or said code disc (27).

4. The steering column module of claim 3, **characterized in that** said projection or projections (16) are pins (16) which are eccentrically disposed and extend in an axial direction, and that said recesses are elongated slots extending in a radial direction.

5. The steering column module according to one of the preceding claims, **characterized in that** said code disc (27) is radially secured and rotatably disposed within a carrier (25) of said steering angle sensor (3).

6. The steering column module according to one of the preceding claims, **characterized in that** said code disc (27) is radially secured and rotatably disposed within a casing (25) of said steering angle sensor (3).

7. The steering column module according to one of the preceding claims, **characterized in that** a scanning device (34) for scanning said code disc (27) is mounted on said carrier (25) of said steering angle sensor (3).

8. The steering column module according to one of the preceding claims, **characterized in that** the rotary angle encoding is disposed on an end face of said code disc (27).

9. The steering column module according to one of the preceding claims, **characterized in that** the rotary angle encoding is constituted on said code disc (27) by holes.

10. The steering column module according to one of the preceding claims, **characterized in that** the rotary angle encoding is disposed on an outer surface of said code disc (27).

## Revendications

1. Module d'arbre de direction pour véhicules automobiles avec une cassette de transmission de signaux (1), dans lequel la cassette de transmission de signaux (1) présente une partie (71) pouvant tourner avec un volant du véhicule automobile et un capteur d'angle de direction (3), dans lequel le capteur d'angle de direction (3) présente un disque codeur (27) supporté en rotation dans le capteur d'angle de direction (3), **caractérisé en ce que** le disque codeur (27) est supporté dans une bague support (49) et une pièce support (57).

2. Module d'arbre de direction selon la revendication 1, **caractérisé en ce que** le disque codeur (27) est solidaire en rotation de la partie tournante (71) de la cassette de transmission de signaux (1).

3. Module d'arbre de direction selon la revendication 2, **caractérisé en ce qu'**il est prévu sur le disque codeur (27) ou sur la partie tournante (71) de la cassette de transmission de signaux (1) au moins une saillie (16) orientée dans le sens axial qui s'engage dans un évidement (75) s'étendant dans le sens radial de la partie tournante de la cassette de transmission de signaux (1) ou du disque codeur (27).

4. Module d'arbre de direction selon la revendication 3, **caractérisé en ce que** la ou les saillies (16) sont des tourillons (16) s'étendant dans le sens axial et disposés de manière excentrée et **en ce que** les évidements sont des trous oblongs s'étendant dans le sens radial.

5. Module d'arbre de direction selon l'une des revendications précédentes, **caractérisé en ce que** le disque codeur (27) est bloqué radialement et supporté en rotation dans un support (25) du capteur d'angle de direction (3).

6. Module d'arbre de direction selon l'une des revendications précédentes, **caractérisé en ce que** le disque codeur (27) est bloqué radialement et supporté en rotation dans un boîtier (45) du capteur d'angle de direction (3).

7. Module d'arbre de direction selon l'une des revendications précédentes, **caractérisé en ce qu'**un dispositif analyseur (34) servant à analyser le disque codeur (27) est disposé sur le support (25) du capteur d'angle de direction (3).

8. Module d'arbre de direction selon l'une des revendications précédentes, **caractérisé en ce que** le codage de l'angle de rotation est disposé sur une face frontale du disque codeur (27).

9. Module d'arbre de direction selon l'une des revendications précédentes, **caractérisé en ce que** le codage de l'angle de rotation se fait sur le disque codeur (27) sous la forme de trous.

10. Module d'arbre de direction selon l'une des revendications précédentes, **caractérisé en ce que** le codage de l'angle de rotation est agencé sur une surface d'enveloppe du disque codeur (27).
